# EUROPEAN PATENT APPLICATION

(11) **EP 2 403 247 A1**
(43) Date of publication of application: **04.01.2012**
(21) Application number: 10251192.0
(22) Date of filing: 30.06.2010
(51) Int. Cl.: H04N 7/24, H04N 7/26

(54) **Transmission of visual tag motions in a video signal**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

In order to apply tag data to a video stream, a macroblock in a frame of the stream, associated with an image which is to be tagged, is identified and motion vectors associated with that macroblock are then used in subsequent frames to generate motion for the associated tag, such that it tracks the tagged object. Such a process reduces overall computational complexity, particularly at the receiver, as the tag motion is determined once, at the head end, for any number of receivers.

## Description

This invention relates to image processing, and has application in the fields of video broadcasting and advertising. In particular it relates to the rendering of text, image or animation as an overlay to a video. This overlay typically appears as a "tag" which points to a feature present in the image (e.g. an object), and tracks its motion. Such tags are typically used for product placement-based advertising, and for enhanced interactivity in sport broadcasts.

In order for the tag to follow the motion of an object, it is necessary to identify, between each frame of a video sequence and the next, how the object to which the tag applies moves across the field of view, so that the tag can remain close to that object. Keeping track of an object's motion is computationally expensive, and would be extremely demanding for the type of digital decoder used by an end-user - generally known as "set top boxes". The tracking operation may instead be performed at the head end, and the resulting trajectory transmitted to each client's set top box. This reduces the computational load, as the tracking for each object only needs to be done once (at the head end), and the computational load is carried by the supplier rather than the customer equipment. However, transmitting the trajectories of all tagged objects would cause a significant increase in the bandwidth required for the service to be transmitted.

Unlike traditional analogue video signals, digital signals are transmitted in a compressed form. Various techniques are used to economise on the required bandwidth, but many of them rely on the observation that, typically, most frames can be described by reference to the previous frame, and then identifying the differences. Further, many of these differences are changes to a block of adjacent picture elements (pixels), for example as one object moves relative to a fixed background. For example, in coding schemes following the MPEG2 / H264 standards, these motion vectors are applied to blocks of 16×16 pixels, called the macroblocks. If much of a scene is moving (for example a camera is panning across the view, or a large object is moving across the view), the simplest way to describe one frame is to use the previous one as a reference, and indicate that one or more (or all) macroblocks in that image have moved in a certain way defined as a motion vector. The movement of such a block from one frame to the next can thus be coded as one vector, rather than treating each pixel's movement separately. Any detail changes within individual macroblocks are then coded individually.

According to the invention, there is provided an image processing technique image processing technique in which the motion of an object depicted in a video signal is tracked by, at the transmitting end:
identifying, in a first frame of the signal, a block of pixels associated with a target object to be tagged, generating the tag, associating with the tag data the identity of the target block, and transmitting the tag and associated target block identity:
   and, at the receiving end,
receiving the tag and associated block identity, monitoring motion vectors for the block so identified present in the video signal, and generating the tag in a position in each frame corresponding to the motion vectors for the tagged object such that the tag keeps track with the tagged object.

In one embodiment of the invention, a correction may be applied to the motion vectors of a tagged object, by generating a difference coordinate between the actual motion vector and a measured motion vector. The motion of the tag co-ordinates may be co-ordinated to track the movements of a macroblock other than the one identified as the target.

The tag data may be a source address from which data can be retrieved for display as the tag.

The invention also provides an apparatus for generating the tag data, a complementary apparatus for processing the tag data to generate the tag at a receiver, and apparatuses for performing both those functions.

This invention minimises the additional information to be transmitted, and also minimises CPU consumption on the client device, as the only additional operation at the receiving end is the rendering of the tag. Thus, having identified an individual macroblock in a video stream with which a tag can be associated, the existing motion vectors associated with the macroblock are also applied to the tag data, so that the motion of the tag in the complete image follows that of the macroblock with which it is associated.

It is relatively straightforward for a content generator to create these tags and locate them in the video stream. The product placement process often starts at the script-writing stage, and somewhere in the production process there is information relating to the presence of an object (e.g. a sponsored product such as a car) in a particular scene.

The tags may be used as placeholders for another layer of information, added by a distributor (for example a broadcaster) on request by possible vendors of the object (such as a car showroom). This is a relatively simple operation, being text processing based, with no need of image processing at all. This way, the distributor/broadcaster can collect extra advertising revenues by inserting information about a preferential vendor for the object, relevant to the market area where the program is being broadcasted. Note that if the program is distributed via DSL, these tags can be adapted down to street level (e.g. nearest restaurant of a particular chain to the viewer's address.

Providing tagging on request allows extra information during the whole event, which may be tailored to the user (for example to follow a particular player in a sporting event, displaying tags in the user's preferred language, etc) and display it on user request.

Real time analysis for sport broadcasts can be provided using tag tracking, but is currently only transmitted to the user as video, on decision of the editor.

It is relatively simple to apply such tags during the generation of the original content, but distributors, broadcasters, or service providers may also wish to provide tags to pre-existing content as a value-added service.

Motion compensation in modern video compression techniques is aimed at reducing the overall amount of data to transmit by the combination of finding the best matching pattern in a previous or subsequent frame, and sending corrective information (a "delta" between the original and reconstructed frame). This delta is easier to compress and will take less data to transmit than the raw information itself.

However, such a technique is primarily intended to minimise the amount of data to transfer, rather than tracking motion. Used directly the motion vectors used in the MPEG standards would lead to slow drift between the object and the tag, (which can be ignored in most cases), or "jumps" to entirely different part of the frame, which cannot be ignored so easily. In a preferred embodiment it is therefore desirable to provide a correction mechanism to correct such errors. This can be achieved by sending a difference coordinate (herein referred to as "delta MV") that corrects such errors. This difference co-ordinate is measured between the actual motion vector and a measured motion vector. The delta MV is the difference between the preferred macroblock's MV and a reference MV. The reference MV can be produced manually by an operator (at post-production stage for a series or a movie), but is more likely to be done by a computationaly intensive target tracking algorithm. This allows the whole CPU / hardware cost on the head end, and allows the process to be done only once, after which the delta MVs can be used repeatedly in multiple transmissions, each to multiple users. The reference MV and the actual delta MV can be derived at different places and different stages of the transmission chain. Typically, the reference MV can be extracted by the content generator, and sent to the encoding point. The delta MV would be typically generated in parallel to the encoding process, just before the broadcasting stage.

In some instances the tag co-ordinates may be made to move with a macroblock other than the one identified as containing the target. This would be advantageous where the targeted macroblock is changing rapidly, but is moving in sympathy with another which is more stable. The more stable macroblock is used as an "anchor" for a tag whose coordinates are outside that macroblock. (An example might be a rapidly changing visual display mounted on a moving object - other parts of the object, unchanging apart from in their position, will be a more reliable anchor than the display itself). The anchor is chosen, from among the available macroblocks, for its apparent motion similarity with the target during the selected scene. The scene is analysed to find what macroblock (MB) has the motion vectors (MV) closest to the tagged object trajectory. Once this anchor MB is found, it is sent as a parameter with the tag along with the offset necessary to recreate the tag position in the set top box. As the tag motion and the anchor's MV are closely correlated, the number of motion corrections to be sent is lower, leading to a lower bandwidth ancillary channel. Motion correction can be achieved later on by sending a delta of the anchor-target offset, or sending a new couple anchor MB / offset.

Embodiments of the invention will now be described, by way of example, with reference to the drawings, in which
Figure 1 is a schematic diagram depicting the functional elements which co-operate at the "head end" to perform an encoding technique according to the invention;
Figure 2 is a schematic diagram depicting the functional elements which co-operate at the "head end" to perform an alternative encoding technique according to the invention;
Figure 3 is a schematic diagram illustrating a motion estimation process used in the technique of Figures 1 and 2;
Figure 4 is a schematic diagram illustrating a "best fit" search loop forming part of the motion estimation process of Figure 3;
Figure 5 is a schematic diagram depicting the functional elements which co-operate at the client device to perform a decoding process.

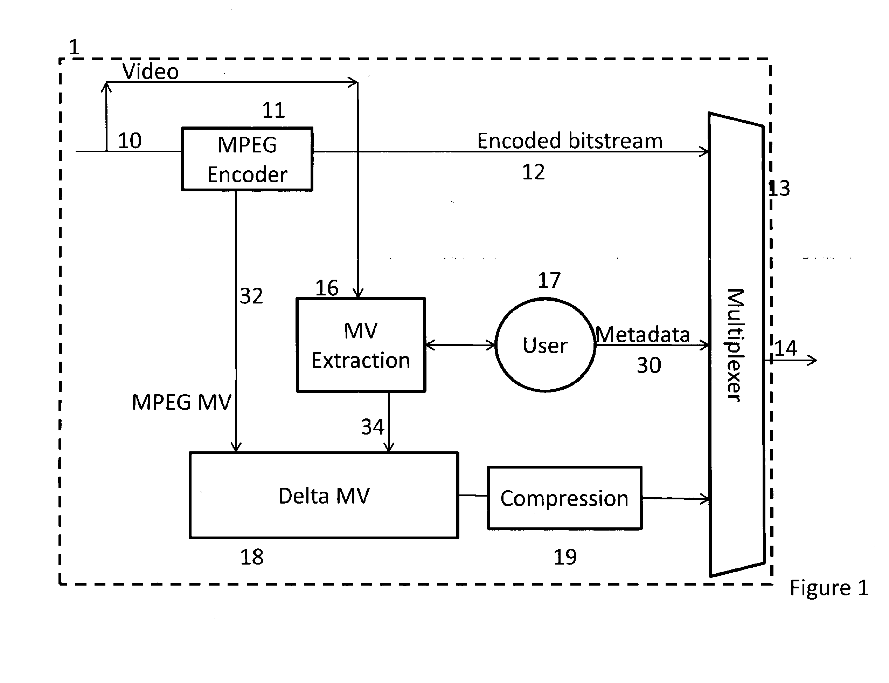

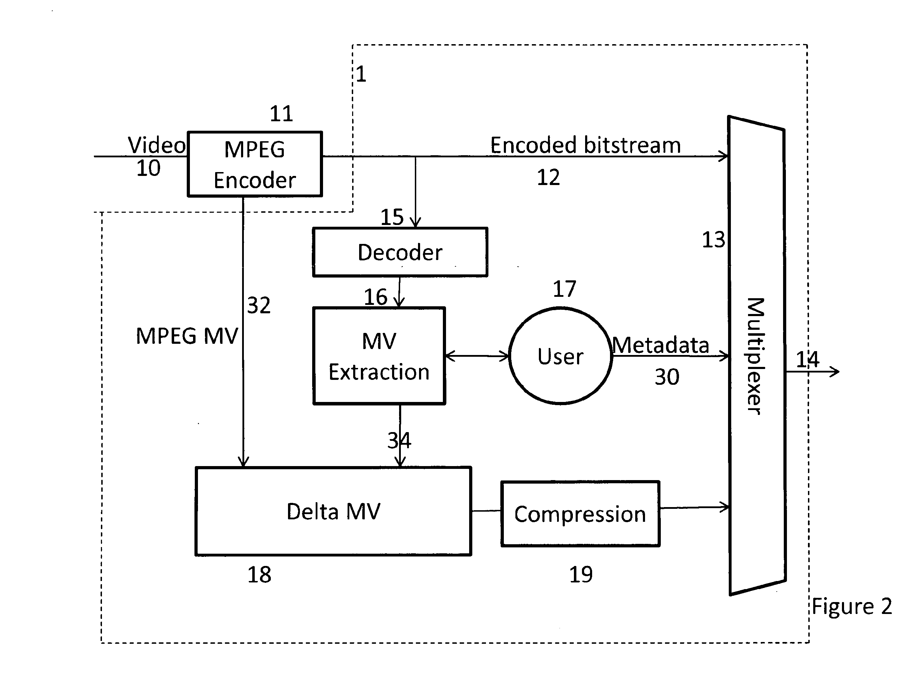

The embodiments of Figures 1 and 2 differ in the way in which motion vectors are extracted from the video stream at the head end: in the embodiment of Figure 1 the motion vectors 10 are available to the user 1 applying the tags, which is likely to be the case when the tags are applied by the same organisation as that which generates the video stream; however, in Figure 2 the head-end user is applying tags to a data stream that has already been encoded elsewhere and is not accessible to the user in its original (unencoded) form 10.

As shown in Figures 1 and 2, a video stream 10 is encoded by an encoder 11 according to a standard such as MPEG, H264 or the like, to generate an encoded bitsteam 12 which is transmitted through a multiplexer 13 to a broadcast medium 14. (The term "broadcast" is used here in a broad sense, to mean any means for transmitting data to several users, not necessarily simultaneously - for example the transmissions may be made on a "video on demand" service).

Tags are applied by a processor 17, either manually by an operator, or automatically by object recognition software. Each tag 30 comprises metadata containing the initial coordinate and a "time to live", expressed by the frame number. It can also contain a timecode of appearance of the object in the scene, and an angle/distance coordinate pair. Such metadata tags 30 are fed to the multiplexer 13 for transmission over the broadcast medium 14. Several tag positions can be linked to define an area. This can later be used for point and click, or touchscreen interactivity

The application 17 of the tags 30 can be greatly simplified by the use of the tracking technique of the invention. In most cases, the object to be tracked would only have to be identified once for the whole duration of a scene. This identification allows a reference trajectory to be generated, using the motion vectors generated by the encoder 11 and forming part of the encoded bitstream 12.

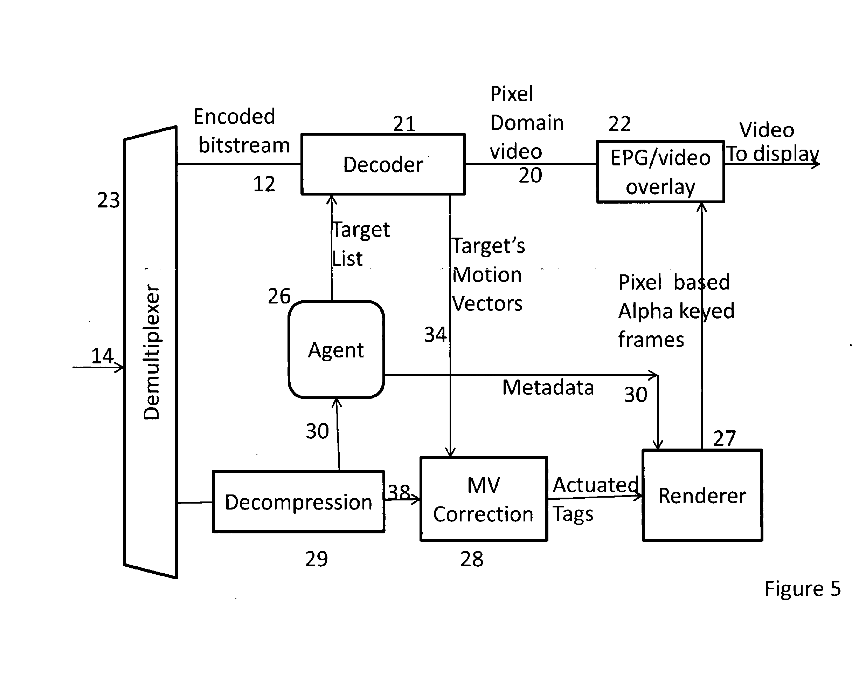

The tag application process 17 provides the actual trajectory of the object and a motion vector extraction process 16 derives the motion vectors representing this trajectory from the video data. If the user 1 has access to the original video stream 10 before the encoding process 11, the motion vectors can be derived from that stream, as shown in Figure 1. However, if the user 1 receives the video in encoded form 12, as shown in Figure 2, the data is decoded (15) and the motion vectors then extracted (16) from the decoded data. The decoder 15 is similar to the conventional decoder 21 used in the receiver equipment (Figure 5)

The next step is to compare the predicted trajectory with the reference, by determining a "delta" motion vector (18).

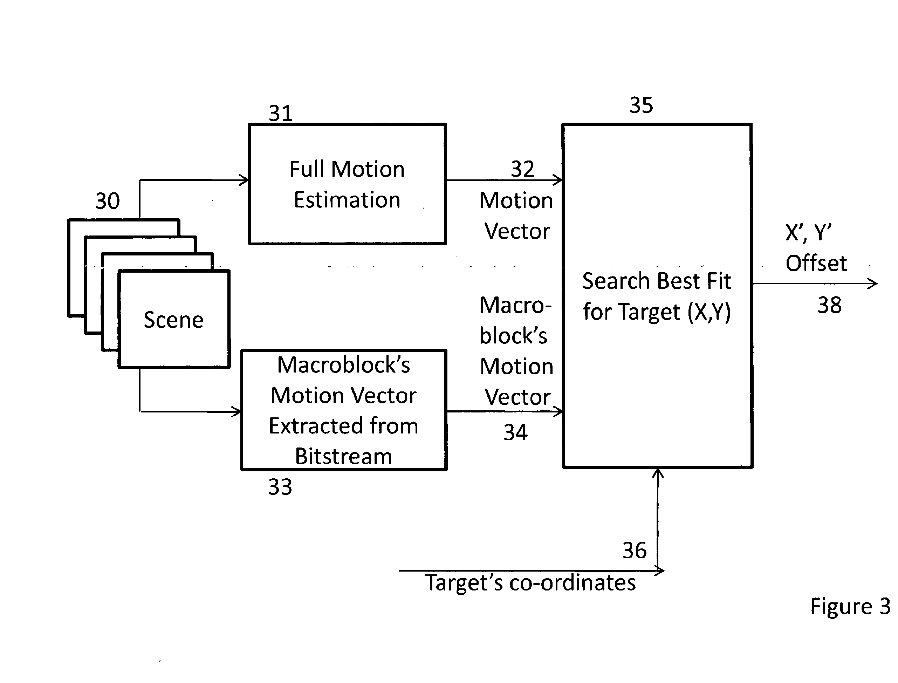

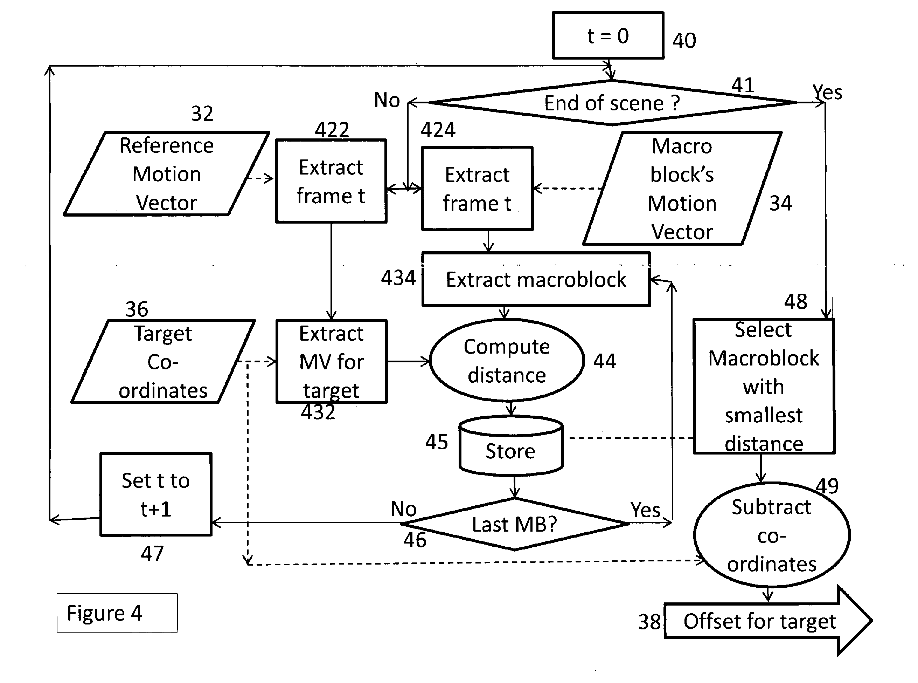

A difference signal is created on the basis of the discrepancy between the predicted and actual trajectories. If the difference between the two trajectories is within a predetermined range, no action is taken. If it fits outside the range, the exact coordinate for that frame as defined by the reference trajectory is inserted in the broadcasted signal. This process is illustrated in Figures 3 and 4. It creates a trajectory correction signal, keeping the tag aligned with the objects present in the scene.

In this version, the scene is analysed to find what macroblock (MB) has the motion vectors (MV) closest to the tagged object trajectory. As shown in Figure 3, for each individual scene 30, the estimated motion 31 is compared with the motion vectors 33 of the target extracted from the bit stream, to generate two streams of motion vectors 32, 34. A search process 35 then identifies the best fit offset 38 for the target's actual co-ordinates 36. The search process 35 is illustrated in the flow diagram of Figure 4.

The process uses two nested loops. The inputs are the target position coordinates (36) (the initial position of the tag), the reference motion vectors 32 and the macroblock motion vectors 34. To avoid identifying the position of the tag on each frame, the object present at this coordinate is then tracked by a CPU-intensive tracking algorithm on the head end, producing the reference motion vectors. In parallel to this, the sequence is encoded using a standard codec, which produces the macroblocks' motion vectors. These are the only motion vectors that will be transmitted across. The loop identifies the one amongst them that best sticks to the object's actual motion, hence searching for the MB MVs that best matches the reference vector. For each frame t=0 to t=T of the scene (counts 40, 41, 47) the respective reference motion vector 32 for that frame is extracted (422). The motion vectors 34 for each macroblock of the frame are extracted (424) and considered in turn (loop 434, 44, 45, 46) by comparing each one with the reference motion vector 32 (step 44) to determine its distance from the reference motion vector 32. The distances are stored (45). The process is then repeated for each frame (loop 47, 41). When the entire scene has been analysed (t=T), the stored distance values (45) are compared (step 48) and the macroblock with the smallest distance value selected.

Once this anchor MB is found, it is sent as a parameter with the tag along with the offset necessary to recreate the tag position in the set top box. The offset 38 is determined (step 49) by subtracting the co-ordinates of the selected macroblock from those of the target location (36).

The resulting "delta" motion vectors are compressed (19) and transmitted with the metadata 30 on the broadcast multiplex 14. As the tag motion and the anchor's MV are closely correlated, the number of motion corrections to be sent is lower, leading to a lower bandwidth ancillary channel. Motion correction can be achieved later on by sending a delta of the anchor-target offset, or sending a new couple anchor MB / offset.

As shown in Figures 1 and 2 the offsets are multiplexed (13) with the main bitstream 12. This allows receivers not equipped to decode the tag data to nevertheless receive the standard programme 12 unmodified.

It is common for an overlay pointing at an object to be presented as a box containing a text, connected to the object with a line. An angle+distance coordinate can be provided to allow the operator to minimise the disturbance to the scene content by suggesting to the decoder better positioning than the default one. Invisible tags can be sent to indicate to the renderer in the set top box which section of the screen should be kept clear. This is important to leave freedom to the set top box on where and how to display the information, depending on the user's screen aspect ratio, resolution, operator's preferred fonts), while avoiding critical parts of the image to be obstructed. The coordinates may have various level of resolution; for example pixel-based or macroblock-based. Coordinates may be encoded on more bits for a pixel level resolution than is required for a macroblock resolution.

At the receiver (Figure 5) the video bitstream signal 12 and the additional metadata information 30 are recovered from the incoming multiplexed signal 14 using a demultiplexer 23. Recovery of the main signal 12 is conventional, going through a decoder 21 to generate a video signal 20. Tags can then be applied as an overlay to this signal (step 22) to provide the final image 24. The generation of these tags will now be described.

The metadata 30 extracted from the multiplexed bitstream 14 is decompressed 29 and passed to a user-controlled agent 26 which selects those tags to be applied. (Alternative tags may be offered, for example in different languages, or highlighting different players in a sporting event, so that the user may select which ones to see).

When a descriptor 30 for a new point of interest is received, the agent creates and initialises a new tracker with the initial X/Y coordinates 34 contained in the metadata stream. The macroblock to which the X/Y coordinates belong is added to a watch list. A countdown is also initialised with the time to live this point of interest has, indicated in frame number. The time to live of each tracker is decremented at every frame, and deleted when the count reaches zero.

As a normal function of the MPEG decoder 21, the video bitstream 12 is parsed for information such as motion vectors. When parsed information identifies to a macroblock present on the watch list, motion vectors 34 are added to the current coordinates of the point of interest in order to update its position. If the new coordinates are outside of the existing macroblock, the new macroblock replaces the old one in the watch list

The list of updated coordinates is available to the user interface 26. A middleware application uses it to refresh the graphics superimposed as an overlay to the video. To this updated coordinate is added the coordinate corrections (delta MV) 38 sent from the head end (Figures 1, 2).

The motion vectors of the target are extracted from the decoder and corrected by the "delta" values (38) to generate actuated tags, whose content is determined by the metadata 30 and whose motion is determined by the corrected motion vectors.

The actuated tags can then be rendered as picture elements (pixels), step 27, to be applied as an overlay (step 22). The middleware 26 follows up possible user actions prompted by the tag content such as the display of extra information, following an URL, or changing channel.

## Claims

1. An image processing technique for tracking the motion of an object depicted in a video signal comprising the steps of , at the transmitting end:
identifying, in a first frame of the signal, a block of pixels associated with a target object to be tagged,
generating data for identifying the tag,
associating with the tag data the identity of the target block, and
transmitting the tag data and associated target block identity.

2. An image processing technique for tracking the motion of an object depicted in a video signal in which, comprising the steps of, at the receiving end,
receiving data identifying the tag, and an associated block identity, monitoring motion vectors for the block so identified present in the video signal, and
generating the tag in a position in each frame corresponding to the motion vectors for the tagged object such that the tag keeps track with the tagged object.

3. An image processing technique in which the motion of an object depicted in a video signal is tracked by, at the transmitting end:
identifying, in a first frame of the signal, a block of pixels associated with a target object to be tagged, generating the tag, associating with the tag data the identity of the target block, and transmitting the tag and associated target block identity:
and, at the receiving end,
receiving the tag and associated block identity, monitoring motion vectors for the block so identified present in the video signal, and generating the tag in a position in each frame corresponding to the motion vectors for the tagged object such that the tag keeps track with the tagged object.

4. A technique according to any preceding claim in which a correction is applied to the motion vectors of a tagged object, by generating a difference coordinate between the actual motion vector and a measured motion vector.

5. A technique according to any preceding claim in which the motion of the tag co-ordinates are co-ordinated to track the movements of a macroblock other than the one identified as the target.

6. A technique according to any preceding claim wherein the tag data is a source address from which data is retrieved for display as the tag.

7. Head-end image processing apparatus for tracking the motion of an object depicted in a video signal comprising:
a selection means for identifying, in a first frame of the signal, a block of pixels associated with a target object to be tagged,
a data processor for generating tag data,
a data combiner for associating with the tag data the identity of the identified block, and
a transmitter for transmitting the tag data and associated block identity.

8. Head-end image processing apparatus according to claim 7, comprising a processor for applying a correction is applied to motion vectors of a target object, by generating a difference coordinate between the actual motion vector of the target object and a measured motion vector.

9. Head-end image processing apparatus according to claim 7 or claim 8 comprising means to identify a second macroblock, other than the one identified as the target, and to co-ordinate the movements of the tag in accordance with the second macroblock so identified

10. Head-end image processing apparatus according to claim 7, claim 8 or claim 9, wherein the tag data is a source address from which data may be retrieved for display.

11. Image processing apparatus for tracking the motion of an object depicted in a received video signal including tag data, and an associated picture block identity, comprising
a motion vector monitor for monitioring the movement of the picture block so identified,
a tag generator for generating a tag having the received tag data in a position in each frame corresponding to the motion vectors for the tagged object such that the tag keeps track with the tagged object.

12. Image processing apparatus according to claim 11, wherein the tag data is a source address from which data may be retrieved for display.
